# EUROPÄISCHE PATENTSCHRIFT

(11) **EP 1 647 358 B1**
(45) Veröffentlichungstag und Bekanntmachung des Hinweises auf die Patenterteilung: **07.05.2008**
(21) Anmeldenummer: 05018748.3
(22) Anmeldetag: 30.08.2005
(51) Int. Cl.: B23Q 37/00, B23Q 39/02, B23Q 1/52, B23Q 1/48, B23Q 3/155

(54) **Mehrseitenbearbeitungsmaschine und Positioniervorrichtung für ein Werkstück**
Processing machine for working several sides of a work piece and workpiece positioning device
Machine de traitement plusieurs faces de la pièce et dispositif pour le positionnement de la pièce

(30) Priorität: 12.10.2004 DE 102004049782
(43) Veröffentlichungstag der Anmeldung: 19.04.2006
(73) Patentinhaber: Schuster, Markus, 86925 Fuchstal-Leeder (DE)
(72) Erfinder: Schuster, Markus, 86925 Fuchstal-Leeder (DE)
(74) Vertreter: Mollekopf, Gerd Willi

(56) Entgegenhaltungen:
- EP-A- 0 340 681
- EP-A- 0 547 554
- DE-A1- 3 530 230
- DE-A1- 10 002 053
- DE-A1- 10 054 965
- PATENT ABSTRACTS OF JAPAN Bd. 006, Nr. 020 (M-110), 5. Februar 1982 (1982-02-05) & JP 56 139835 A (MITSUBISHI ELECTRIC CORP), 31. Oktober 1981 (1981-10-31)

## Beschreibung

Die Erfindung betrifft eine Mehrseitenbearbeitungsmaschine mit der ein Werkstück mehrflächig bzw. auf mehreren Seiten bearbeitbar ist, sowie eine Positioniervorrichtung, mit der ein Werkstück zur Mehrseitenbearbeitung positionierbar ist.

Aus der DE 41 42 121 A1 ist eine Transferstraße zur Bearbeitung eines Werkstücks auf mehreren Seiten bzw. von mehreren Seiten bekannt. Mehrere Bearbeitungsstationen sind nebeneinander angeordnet und in einem vorgegebenen Bearbeitungstakt werden Werkstücke auf einer Fördereinrichtung von Bearbeitungsstation zu Bearbeitungsstation weitertransportiert. Mit einer zwischen den Bearbeitungsstationen angeordneten Wendestation wird das Werkstück um 90° gedreht, um so eine Bearbeitung aus einer anderen Richtung in der nächsten Bearbeitungsstation zu ermöglichen. Jede Bearbeitungsstation weist eine separate Einspanneinrichtung auf, mit der das Werkstück zur Bearbeitung in dieser Station eingespannt wird. Auch in der Wendestation wird das Werkstück zum Wenden erneut eingespannt und gelöst. In jeder Bearbeitungsstation sind zusätzliche Elemente zum Justieren des Werkstücks beim Einspannen vorgesehen. Das wiederholte Einspannen des Werkstücks kann zu Ausrichtungs-Ungenauigkeiten zwischen den nacheinander bearbeiteten Flächen führen, insbesondere wenn die Anlagestellen zur Positionierung des Werkstücks selbst bearbeitungsbedingten Toleranz-Schwankungen unterliegen.

Die DE 100 02 053 C2 beschreibt eine Pick-Up-Anordnung mit zwei Werkstückspindeln, die nach dem Pick-Up-Verfahren arbeiten. Dabei kann eine Werkstückspindel auf ihrem Schlitten vertikal verfahren werden, um ein Werkstück aus einem Werkstücktransportsystem aufzunehmen. Der Schlitten ist auf zwei horizontalen Führungen gelagert, so dass die Werkstückspindel von einer Ladestation zu einer Bearbeitungsposition verfahrbar ist. Dadurch ist es einerseits nicht notwendig, ein Werkstück der Werkstückspindel durch ein Handling bereitzustellen, anderseits führt aber der zusätzliche Freiheitsgrad der Werkstückspindel (vertikales Verfahren auf dem Schlitten) zu einem schweren Spindelaufbau und folglich zu einer beschränkten Fahrgeschwindigkeit entlang der Horizontalführung.

In der DE 100 54 965 A1 ist eine Werkstückspindel zwischen zwei Bearbeitungsstellen in horizontale Richtung verfahrbar. Die Achse der Werkstückspindel ist vertikal ausgerichtet.

Die DE 100 54 965 A1 betrifft eine Bearbeitungsmaschine in Modulbauweise, bei der eine Werkstückspindel ein Werkstück zwischen zwei Bearbeitungseinrichtungen hin- und herfährt. Die Bearbeitungseinrichtungen sind ein Revolverkopf mit Werkzeugen und eine Spindel mit einem Fräskopf. Alternativ werden als Bearbeitungseinrichtung feststehende Drehstähle, ein Bohrer auf einer Bohrspindel oder eine Schleifscheibe vorgeschlagen. Dabei können die Revolverköpfe vertikal oder horizontal angeordnet sein. Eine Änderung von der vertikalen zur horizontal geschwenkten Anordnung eines Werkzeugs erfordert auch das Schwenken der Spindelachse der Einspanneinrichtung um 90°. Am Werkstück wird eine Drehbearbeitung vorgenommen wird, bei der das Werkstück durch die Antriebsspindel drehend angetrieben wird. Die Bearbeitung erfolgt dann mit feststehenden oder wiederum drehenden Werkzeugen.

Bei der DE 100 02 053 A1 kommt eine nach dem Pick-Up-Prinzip arbeitende Drehmaschine zum Einsatz. Eine erste Drehspindel mit einer Spanneinrichtung nimmt ein zu bearbeitendes Werkteil von einem ersten Transportsystem auf und transportiert das Werkteil zu einem Drehwerkzeug zur Bearbeitung. Nach der Bearbeitung in der ersten Bearbeitungsstation wird das Werkteil auf ein zweites Transportband abgesetzt, das das Werkteil zur zweiten Bearbeitungsstation transportiert. In der zweiten Bearbeitungsstation wird das Werkstück wiederum durch eine zweite Spindel vom Transportband abgenommen und zu einer Schleifeinrichtung transportiert. Nach der Bearbeitung in der zweiten Bearbeitungsstation transportiert die Arbeitsspindel das Werkteil zu einem dritten Transportband, das das Werkteil aus der zweiten Bearbeitungsstation abtransportiert. Die erste und zweite Arbeitsspindel sind um ihre Spindelachse und um eine dazu senkrechte Querachse drehbar.

Die EP 0 340 681 A2 offenbart eine Einspanneinrichtung zur Drehbearbeitung, die sich auf einem Werkstücktisch beispielsweise einer Ständerbohr- oder Fräsmaschine aufsetzen und aufspannen lässt.

Bei der Werkstückhaltevorrichtung der EP 0 547 554 A1 wird ein Werkstück zwischen zwei Klemmstücken eingespannt und kann dort entweder durch drehenden Antrieb mittels einer Antriebsspindel drehend bearbeitet werden. Oder das Werkstück wird in einer Winkelstellung gehalten und kann dort beispielsweise mittels eines Stimfräsers von einer Seite bearbeitet werden. Dabei wird das Werkstück zwischen den Klemmstücken schraubstockartig eingespannt, so dass eine entsprechende Stabilität gewährleistet ist.

Es ist daher Aufgabe der Erfindung, eine Mehrseitenbearbeitungsmaschine und ein Verfahren vorzusehen, die eine Bearbeitung eines Werkstücks von mehreren Seiten mit hoher Maßhaltigkeit der bearbeiteten Seiten zueinander ermöglicht.

Diese Aufgabe wird mit den Merkmalen des Anspruchs 1 bzw. 21 gelöst.

Vorteilhafte Ausgestaltungen sind Gegenstand der Unteransprüche.

Gemäß Anspruch 1 weist eine Mehrseitenbearbeitungsmaschine zumindest zwei Bearbeitungsstationen bzw. -einrichtungen zum Bearbeiten eines Werkstücks auf. Das Werkstück ist in einer Einspannvorrichtung einer Positioniervorrichtung eingespannt und wird in der Einspannvorrichtung ohne Umspannen während der Bearbeitung in den zumindest zwei Bearbeitungsstationen gehalten. Die Positioniervorrichtung ruht auf einer Verstelleinrichtung, so dass die Positioniervorrichtung und damit ein eingespanntes Werkstück zwischen den Bearbeitungspositionen der zumindest zwei Bearbeitungsstationen verfahrbar ist. Ein Umspannen des Werkstücks zwischen den beiden Bearbeitungsstationen ist nicht erforderlich, so dass von Bearbeitungsposition zu Bearbeitungsposition keine Fehljustierung oder einspanntoleranzbedingte Abweichung der Bearbeitung auftreten kann.

Die Einspannvorrichtung ist um ihre Längsachse dreh- oder schwenkbar und/oder um eine quer zur Einspannvorrichtung verlaufende Querachse, so dass das Werkstück in einer der Bearbeitungsstationen oder beim Überfuhren zwischen den Bearbeitungsstationen neu ausgerichtet und von einer anderen Seite mittels der Bearbeitungsstation bearbeitbar ist weiterhin ist gemäß Anspruch 1 die Einspannvorrichtung sowohl um ihre Längsachse als auch um ihre Querachse dreh-odes schwenkbar. Ist beispielsweise die Einspannvorrichtung um ihre Längsachse drehbar und die Längsachse horizontal ausgerichtet, so kann bei einer Vertikalbearbeitungsmaschine eine Bearbeitung von allen Seiten am Werkstück durch sukzessives Drehen des Werkstücks um die Längsachse der Einspannvorrichtung erfolgen. Ist andererseits die Einspannvorrichtung um ihre Querachse schwenkbar und erfolgt ebenfalls eine Bearbeitung mittels einer Vertikalbearbeitungsmaschine, so ist das Werkstück von zwei Seiten und von der Stirnfläche her bearbeitbar. Durch Kombination der Dreh- und Schwenkbarkeit um die Längs- und Querachse der Einspannvorrichtung ergibt sich eine Fünf-Flächen-Bearbeitbarkeit, wobei vorteilhaft durch Einstellbarkeit in allen Zwischenpositionen eine allseitige Bearbeitung des Werkstücks möglich ist, abgesehen von der zur Einspannvorrichtung zeigenden Stirnfläche des Werkstücks.

Eine Bearbeitungseinrichtung in der Bearbeitungsstation, insbesondere eine Werkzeugspindel, weist eine Aufnahme zum Halten von austauschbarem Werkzeug (z. B. Drehstahl, Bohrer, Fräser, Schleifkopf) auf. Damit lassen sich mehrere Bearbeitungsgänge in einer Bearbeitungsstation an dem Werkstück durchführen, wie beispielsweise Bohren, Fräsen oder Schleifen am Werkstück.

Bei einer vorteilhaften Ausgestaltung ist die Einspannvorrichtung selbst auf einer Antriebsspindel für hohe Drehzahlen angeordnet, so dass das Werkstück rotierend angetrieben werden kann, vorzugsweise mit bis zu 1000 U/min. Wird nun in zumindest einer der Bearbeitungsstationen ein feststehendes Werkzeug bereitgestellt, so kann das Werkstück bei drehender Einspannvorrichtung drehend bearbeitet werden. Vorteilhaft ist dabei das feststehende Werkzeug in radialer und axialer Richtung bezüglich der Drehachse der Einspannvorrichtung verstellbar. Vorteilhaft ist das feststehende Werkzeug in einer stillstehenden Werkzeugspindel eingespannt, so dass ein Wechsel der Bearbeitung stattfinden kann zwischen Antrieb der Einspannvorrichtung und Stillstand der Werkzeugspindel zu Antrieb der Werkzeugspindel und Stillstand der Einspannvorrichtung.

Ganz besonders vorteilhaft sind die Werkzeuge bzw. die Werkzeugantriebe beider Bearbeitungsstationen an einem gemeinsamen Maschinengrundgestell gelagert, so dass sich zum einen der Platzbedarf durch Verwendung nur eines gemeinsamen Maschinengrundgestells verringert und andererseits die Präzision durch genauere Ausrichtung der beiden Bearbeitungsstationen zueinander erhöht. Die Bearbeitungsgenauigkeit lässt sich noch weiter erhöhen, wenn zusätzlich auch die Verstelleinrichtung der Positioniervorrichtung am Maschinengrundgestell gelagert ist.

Die Verstelleinrichtung zum Positionieren der Bearbeitungsmaschine(n), des Werkzeugs in den Bearbeitungsstationen und/oder die Verstelleinrichtung der Positioniervorrichtung sind besonders vorteilhaft Linearantriebe mit Linearmotoren, mit denen eine hochgenaue, reproduzierbare Positionierung des Werkstücks in den Bearbeitungspositionen gewährleistet ist.

Vorteilhaft ist eine Bearbeitungsstation eine Werkzeugspindel zum drehenden Antreiben eines Werkzeugs. Ein solcher Spindelantrieb kann eine Hochgeschwindigkeitsspindel sein, oder ein auf einem Werkzeugrevolver angeordneter Drehantrieb. In der Bearbeitungsstation kann dem Werkstück zum Bearbeiten auch ein feststehendes Werkzeug zugestellt werden, beispielsweise wenn die Einspannvorrichtung mit dem eingespannten Werkstück drehend angetrieben wird.

Ganz besonders vorteilhaft erfolgt der Austausch der Werkzeuge in der Aufnahme mittels einer Bestückungseinrichtung, wobei die Werkzeugspindel in diesem Fall nicht horizontal verfahrbar sein muss, da das auszutauschende Werkzeug durch die Bestückungseinrichtung zur Achse der Werkzeugspindel überführt wird. Alternativ wird das Werkzeug durch eine Werkzeugbereitstellungseinrichtung in einer vorgegebenen Ladeposition der Werkzeugspindel bereitgestellt, so dass die Werkzeugspindel lediglich eine kurze Distanz zwischen Bearbeitungsposition und Beladeposition verfahren werden muss.

Sind bei der Bearbeitungsmaschine zumindest zwei Bearbeitungsstationen vorgesehen, die mit austauschbarem Werkzeug bestückbar sind, so kann das Werkstück mit der Positioniervorrichtung nach der Bearbeitung an einer ersten Bearbeitungsstation zur zweiten Bearbeitungsstation überführt werden, während bei der ersten Bearbeitungsstation ein Werkzeugwechsel durchgeführt wird. Entsprechend gilt dies für einen Werkzeugwechsel bei der zweiten Bearbeitungsstation, so dass insgesamt die Bearbeitungszeit nicht durch den Werkzeugwechsel limitiert ist, da die Überführungszeit zwischen der ersten und zweiten Bearbeitungsstation sehr kurz ist. Beispielsweise beträgt die Nebenzeit, d.h. die Zeit zur Überführung zwischen der ersten und zweiten Bearbeitungsstation bei spanender Bearbeitung weniger als 0,3 Sekunden bei Verwendung einer Hochgeschwindigkeitslinearführung für die Positioniervorrichtung. Gerade bei einer Bearbeitung eines Werkstücks mit vielen unterschiedlichen Werkzeugen ist folglich der Werkzeugwechsel nicht mehr der limitierende Faktor und es werden dennoch lediglich zwei Bearbeitungsstationen zur vollständigen Bearbeitung benötigt. Wie oben erwähnt, ist trotz der Bearbeitung mittels unterschiedlicher Werkzeuge kein Umspannen des Werkstücks erforderlich, so dass selbst bei sehr vielen unterschiedlichen Bearbeitungsschritten eine extrem hohe Präzision beibehalten wird.

Bei einer vorteilhaften Ausgestaltung ist der Bearbeitungsmaschine eine Handhabungseinrichtung zugeordnet, die ein Werkstück in die Einspannvorrichtung zuführt und/oder das bearbeitete Werkstück daraus entnimmt. Damit kann eine vollautomatische Bearbeitung des Werkstücks in der Bearbeitungsmaschine erfolgen. Vorteilhaft wird das unbearbeitete Werkstück in einem Magazin bereitgestellt und durch die Handhabungseinrichtung das bearbeitete Werkstück in das gleiche Magazin oder ein weiteres Magazin mit bearbeiteten Werkstücken zurückgeführt.

Eine Werkzeugpositioniervorrichtung gemäß Anspruch 20 umfasst zumindest eine Werkstückspindel mit einer Einspannvorrichtung zum Einspannen eines Werkstücks. Das Drehen der Einspannvorrichtung auf der Werkstückspindel ermöglicht das Drehen des Werkstücks in verschiedene Positionen zur radialen Bearbeitung aus verschiedenen Seitenrichtungen. Vorteilhaft ist das Werkstück im eingespannten Zustand mit der Werkstückspindel bei hoher Drehzahl drehbar, so dass bei stehendem Werkzeug eine drehende Bearbeitung des Werkstücks ermöglicht wird.

Bei einer vorteilhaften Ausgestaltung weist die Positioniervorrichtung eine Verstelleinrichtung auf, auf der die Werkstückspindel angeordnet und zwischen zumindest zwei Bearbeitungsstationen oder zwischen einer Bearbeitungsstation und einer Beladeposition verfahrbar ist. Vorteilhaft erfolgt hier das Verfahren zwischen mehreren Bearbeitungsstationen und einer Beladeposition zum Beladen eines Werkstücks in die Einspannvorrichtung.

Anhand von Zeichnungen werden Ausführungsformen der Erfindung näher erläutert. Es zeigen:
- Fig. 1: eine Mehrseitenbearbeitungsmaschine in Seitenansicht,
- Fig. 2: eine Spanneinheit in verschiedenen Bearbeitungspositionen,
- Fig. 3: eine schematische Darstellung der Mehrseitenbearbeitungsmaschine von Fig. 1 in Draufsicht,
- Fig. 4: die Mehrseitenbearbeitungsmaschine von Fig. 1 in Ausgestaltung mit weiteren Bearbeitungseinrichtungen,
- Fig. 5: eine weitere Ausgestaltung der Mehrseitenbearbeitungsmaschine von Fig. 1,
- Fig. 6: eine Ausgestaltung bei der zwei Spanneinheiten auf einer Führung angeordnet sind,
- Fig. 7: eine Darstellung von Betriebsabläufen bei Verwendung der zwei Spanneinheiten von Fig. 6, und
- Fig. 8: eine weitere Ausgestaltung einer Spanneinheit.

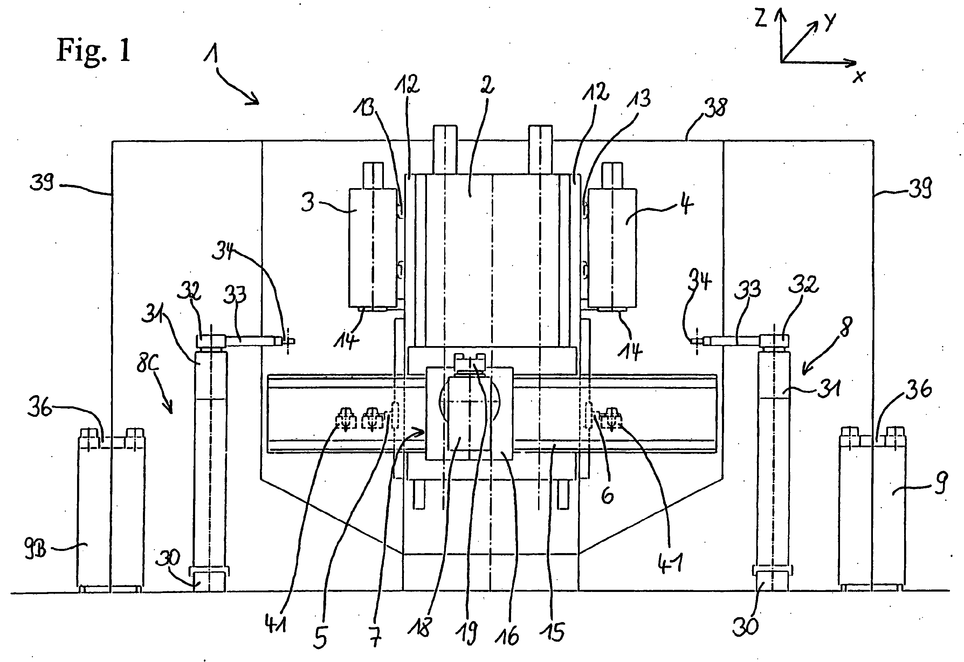

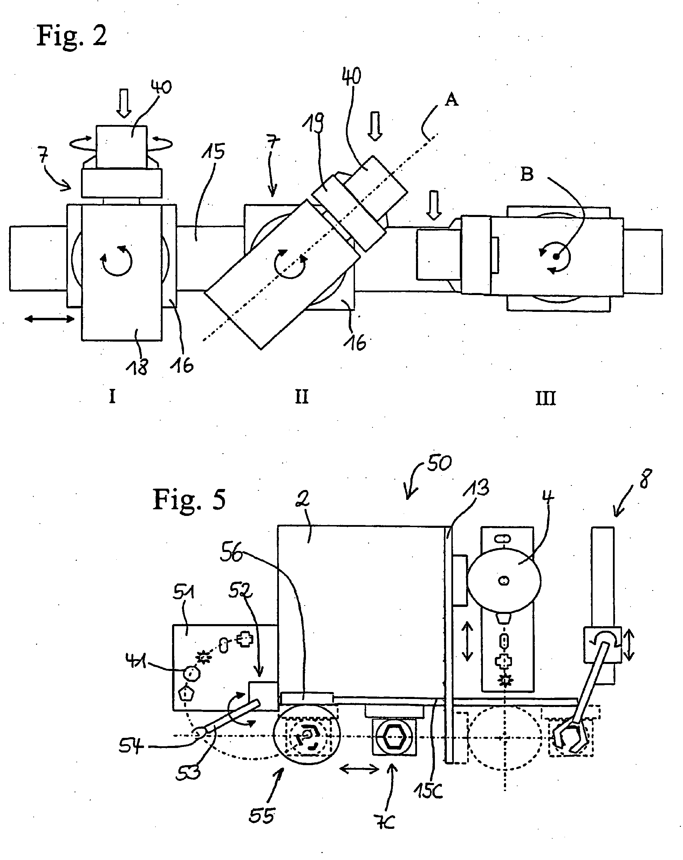

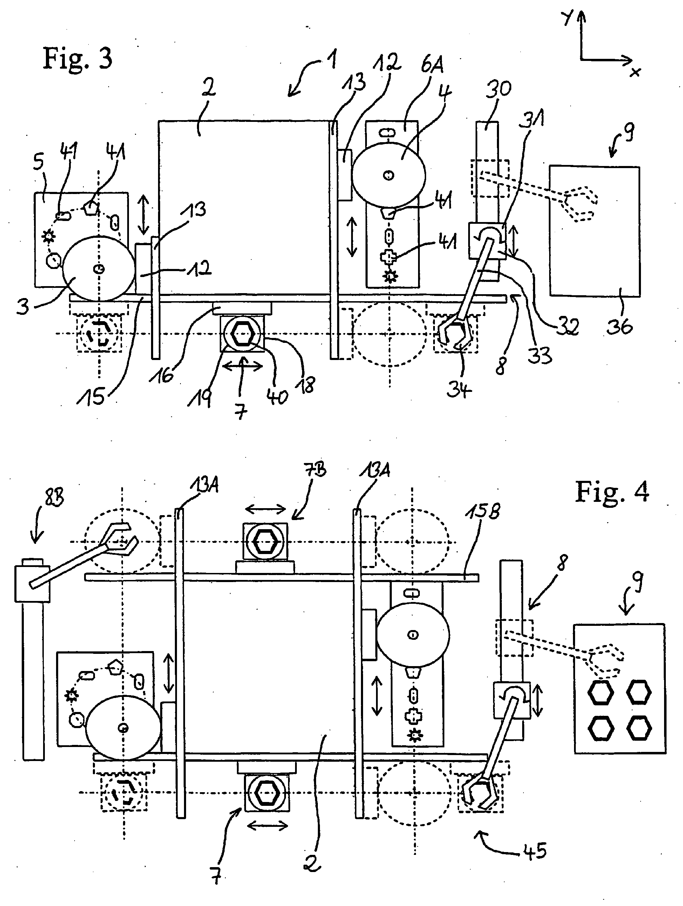

Fig. 1 zeigt eine schematische Seitenansicht einer Mehrseitenbearbeitungsmaschine 1. An den Seiten eines Maschinenständers 2 sind eine erste Werkzeugspindel 3 und zweite Werkzeugspindel 4 angeordnet. Der ersten Werkzeugspindel 3 werden über einen Werkzeugwechsler 5 entsprechend der Bearbeitungsbedingungen unterschiedliche Werkzeuge 41 (siehe Fig. 3) zugeführt. Die zweite Werkzeugspindel 4 entnimmt das benötigte Werkzeug aus einem Werkzeughalter 6. Das zu bearbeitende Werkstück 40 (Fig. 2) ist in einer Spanneinheit 7 eingespannt und wird wahlweise in die erste oder zweite Bearbeitungsposition der ersten oder zweiten Werkzeugspindel 3, 4 verfahren. Das unbearbeitete Werkstück 40 wird der Spanneinheit 7 durch ein erstes Handling 8 zugeführt und mit diesem das bearbeitete Werkstück 40 aus der Spanneinheit 7 entnommen. Das erste Handling 8 entnimmt die unbearbeiteten Werkstücke aus einer Palettiereinrichtung 9, in die die bearbeiteten Werkstücke zur Zwischenlagerung wieder zurückgeführt werden.

Optional wird ein unbearbeitetes Werkstück durch ein zweites Handling 8C der Spanneinheit 7 zugeführt und das bearbeitete Werkstück durch das erste Handling 8 wieder entnommen. Die unbearbeiteten Werkstücke 40 entnimmt das zweite Handling 8C einer zweiten Palettiereinrichtung 9B mit einem Palettentisch 36.

Die erste und zweite Werkzeugspindel 3, 4 sind jeweils auf einer Vertikalführung 12 gelagert, mit der die Werkzeugspindel 3, 4 in vertikale Richtung verfahrbar ist (in Z-Richtung wie am Dreibein von Fig. 1 dargestellt). An den Vertikalführungen 12 sind Horizontalführungen 13 gelagert, so dass die Werkzeugspindeln 3, 4 zum Werkzeugwechsel und entlang der Horizontalführung 13 verfahrbar sind (in Fig. 1 senkrecht zur Zeichenebene). An der Unterseite weisen die Spindeln 3, 4 jeweils eine Aufnahme 14 auf, mit der das aktuell zu verwendende Werkzeug gefasst wird.

Die Spanneinheit 7 ist auf einem Schlitten 16 gelagert, der längs einer Horizontalführung 15 verfahrbar ist. Die Horizontalführung 15 ist eine Linearführung zur hochgenauen Positionierung des Schlittens 16 und damit des Werkstücks 40. Auf dem Schlitten 16 ist ein Spindelantrieb 18 um eine senkrecht zur Zeichenebene der Fig. 1 stehende Achse drehbar gelagert. Der Spindelantrieb 18 kann auf dem Schlitten 16 in eine vorgegebene Winkelposition gedreht werden. Der Spindelantrieb 18 treibt einen Spannkopf 19 an, in dem das Werkstück 40 eingespannt ist.

Fig. 2 zeigt schematisch eine Seitenansicht der Spanneinheit 7 in verschiedenen Bearbeitungsstellungen. Die einzelnen X-Stellungen der Spanneinheit 7 entlang der Horizontalführung 15 dienen hier nur der Veranschaulichung und entsprechen nicht den tatsächlichen Stellungen in der jeweiligen Bearbeitungsposition der Werkzeugspindeln 3, 4. In der Stellung I von Fig. 2 lässt sich das Werkstück 40 mit einer der Werkzeugspindeln 3, 4 an der Stirnfläche bzw. an der Außenfläche (Werkstück rotierend) bearbeiten. Wird die Spindel 18 angetrieben, so kann in der Werkzeugspindel 3 oder 4 ein Werkzeug bei stehender Spindelwelle der Werkzeugspindel 3, 4 eingespannt sein und so eine drehende Bearbeitung des Werkstücks 40 vorgenommen werden. Die Drehung durch den Spindelantrieb 18 erfolgt dabei um dessen Längsachse A, während eine Drehung des Spindelantriebs 18 auf dem Schlitten 16 um eine Querachse B erfolgt. In der Stellung II nimmt die Längsachse A eine Zwischenstellung zwischen einer vertikalen Ausrichtung (I) und einer horizontalen Ausrichtung (III) ein, so dass sich bei feststehender Spindel des Spindelantriebs 18 eine Fläche in der Zwischenposition zwischen der Stirn- und Seitenfläche bearbeiten lässt. In der Stellung III ist das Werkstück von der Seite durch eine Werkzeugspindel 3, 4 bearbeitbar, wobei sich die Drehstellung der Spindel des Spindelantriebs 18 in jeder gewünschten Stellung zwischen 0 bis 360° zur Bearbeitung des Werkstücks 40 vorgeben lässt.

Die Handlings 8, 8C sind auf einer linearen Bodenführung 30 angeordnet (siehe auch Fig. 3, in der jedoch nur das erste Handling 8C dargestellt ist), mit der die Handlings in Y-Richtung (senkrecht zur Zeichenebene in Fig. 1) verfahrbar sind. Jedes Handling 8, 8C hat eine säulenartige Vertikal-Verstelleinheit 31, mit der ein an einem Schwenklager 32 schwenkbar gelagerter Greifarm 33 in vertikale Richtung auf und ab fahrbar ist. Der Greifarm 33 ist am Schwenklager 32 horizontal verschwenkbar und hat an seinem vorderen Ende einen Greifer 34 zum Greifen eines Werkstücks 40. Mit dem Handling 8, 8C wird das Werkstück zwischen der Spanneinheit 7 und der Palettiereinrichtung 9 verfahren, wobei das Werkstück 40 aus einem Palettentisch 36 der Palettiereinrichtung 9 zur Bearbeitung entnommen wird und/oder nach der Bearbeitung auf dem Palettentisch 36 abgesetzt wird.

Wie in Fig. 1 angedeutet, ist die Mehrseitenbearbeitungsmaschine 1 in einer Bearbeitungskabine 38 angeordnet und über zwei nicht dargestellte Verschlussöffnungen, durch die der Greifarm 33 des jeweiligen Handlings 8, 8C hindurchgreift, mit zwei Handhabungskabinen 39 verbunden. Der Palettentisch 36 der jeweiligen Palettiereinrichtung 9, 9B zur Zwischenspeicherung der Werkstücke hat einen innerhalb und außerhalb der Handhabungskabine 39 liegenden Teil, wobei der äußere Teil zur automatischen oder manuellen Bestückung des Palettentisches 36 mit Werkstücken dient.

Die Fig. 3 zeigt eine schematische Draufsicht auf die Mehrseitenbearbeitungsmaschine von Fig. 1, in der mittels strichpunktierter Linien die Verstellwege der Spindelachsen der ersten und zweiten Werkzeugspindel 3, 4 und der Spanneinheit 7 dargestellt sind. In Fig. 3 ist die erste Werkzeugspindel 3 in ihrer Werkzeugwechselposition positioniert, bei der durch den Werkzeugwechsler 5 das im nächsten Bearbeitungsschritt zu verwendende Werkzeug unter der Aufnahme 14 der Werkzeugspindel 3 positionierbar ist. Durch vertikales Absenken der Werkzeugspindel 3 wird das Werkzeug 41, das im Karussell des Werkzeugwechslers 5 bereitgestellt wird, ergriffen. Zuvor wurde das nicht mehr benötigte Werkzeug in einer leeren Position des Werkzeugkarussells durch Absenken der Werkzeugspindel 3 in der Werkzeugwechselposition auf das Werkzeugkarussell abgesetzt. Die zweite Werkzeugspindel 4 ist in Y-Richtung nach hinten verschoben und wird zum Entladen des nicht mehr benötigten Werkzeugs 41 über der vorgesehenen Leerposition des Werkzeughalters 6 positioniert, wo das Werkzeug durch vertikales Absenken der zweiten Werkzeugspindel 4 abgesetzt und nach vertikalem Hochfahren, horizontalem Verfahren (Y-Richtung) und wiederum vertikalem Absenken das nächste, benötigte Werkzeug 41 ergriffen wird.

Die Bearbeitungsposition der zweiten Werkzeugspindel 4 liegt auf dem Kreuzungspunkt der strichpunktierten Linien, wie dies durch die gestrichelte Linie in Fig. 3 dargestellt ist. Die Bearbeitungsposition der ersten Werkzeugspindel 3 liegt ebenfalls im Kreuzungspunkt der strichpunktierten Linien für die Mittellinie der ersten Werkzeugspindel 3 und der Spindel der Spanneinheit 7. (Der Verstellweg der ersten Werkzeugspindel 3 in Y-Richtung und der Verstellweg der Spanneinheit 7 in X-Richtung kreuzen sich in Draufsicht.) Auf der linken Seite der Horizontalführung 15 ist die Spanneinheit 7 in der gestrichelten Position in der Bearbeitungsposition für die erste Werkzeugspindel 3 dargestellt. Auf der rechten Seite der Horizontalführung 15 ist die Spanneinheit 7 in der Werkstückübergabeposition für das Handling 8 gestrichelt dargestellt. Mittels durchgezogener Linien ist die Spanneinheit 7 in Fig. 3 in einer Zwischenposition bei der Überführung zwischen den beiden Bearbeitungspositionen der ersten und zweiten Werkzeugspindel 3, 4 dargestellt.

Die Überführungszeit des Werkstücks zwischen den Bearbeitungspositionen liegt typischerweise unter 0,3 Sekunden, während der Werkzeugwechsel typischerweise ungefähr 2 Sekunden benötigt. Somit wird ein erforderlicher Werkzeugwechsel vorteilhaft durch Überführung des Werkstücks zwischen den beiden Werkzeugspindeln 3, 4 überbrückt, was wesentlich schneller erfolgt als ein Werkzeugwechsel an einer Werkzeugspindel, während die Spanneinheit 7 in einer Bearbeitungsposition auf den nächsten Bearbeitungsschritt wartet. Für den nächsten Werkzeugwechsel hat dann beispielsweise die erste Werkzeugspindel 3 eine Wechselzeit zur Verfügung, die sich zusammensetzt aus den beiden Überführungszeiten zwischen den beiden Bearbeitungspositionen und der Bearbeitungszeit an der zweiten Werkzeugspindel 4. Durch das Handling 8 oder 8C erfolgt das Austauschen eines Werkstücks in der Spanneinheit 7 in lediglich 2 bis 3 Sekunden, so dass insgesamt ein sehr hoher Werkstückdurchsatz erzielt wird.

In einer nicht dargestellten Ausgestaltung weist der Greifarm 33 einen Doppelgreifer auf, wobei zum Beladen ein erster Greifer das bearbeitete Werkstück aus der Spanneinheit 7 entnimmt und ein zweiter Greifer, der bereits mit einem unbearbeiteten Werkstück beladen ist, das unbearbeitete Werkstück in die Spanneinheit 7 lädt. Der Greiferwechsel bei einem Doppelgreifer erfolgt dabei vorteilhaft durch Schwenken um die Greifarmachse.

Ein teilweise bearbeitetes Werkstück kann auch durch einen um die Greiferlängsachse schwenkbaren Greifarm 33 des Handlings 8 und/oder 8C gewendet und der Spanneinheit 7 wieder zugeführt werden. Dadurch ist auch die zuvor unzugängliche Stirnseite (6. Seite) bearbeitbar.

Fig. 4 zeigt in schematischer Draufsicht eine Mehrseitenbearbeitungsmaschine 45, die gegenüber der Mehrseitenbearbeitungsmaschine 1 dahingehend erweitert ist, dass auf der zur Spanneinheit 7 gegenüberliegenden Seite eine weitere Spanneinheit 7B angeordnet ist. Die Spanneinheit 7B ist auf einer Horizontalführung 15B verfahrbar zwischen zwei zusätzlichen Bearbeitungspositionen der ersten und zweiten Werkzeugspindel 3, 4. Die erste und zweite Werkzeugspindel 3, 4 sind an verlängerten Horizontalführungen 13A angeordnet, so dass sich entlang des Verfahrwegs des in der Spanneinheit 7B eingespannten Werkstücks die zusätzlichen Bearbeitungspositionen ergeben. Gegenüberliegend zum Handling 8 ist auf der anderen Seite des Maschinenständers 2 ein weiteres Handling 8B angeordnet, mit dem beispielsweise ein Werkstückwechsel an der Spanneinheit 7B oder 7 ausgeführt wird. Es kann ebenfalls eine Werkstückübergabe von der Spanneinheit 7 zur Spanneinheit 7B erfolgen, um das Werkstück auf der zweiten Schiene (Spanneinheit 7B) weiterzubearbeiten, während auf der ersten Schiene (Spanneinheit 7) ein unbearbeitetes Werkstück durch das Handling 8 zugeführt wird. Das fertig bearbeitete Werkstück wird von der zweiten Schiene (Spanneinheit 7B) durch das Handling 8 entnommen und auf der Palette 36 zwischengelagert.

Neben einer hintereinander geschalteten Bearbeitung zwischen der ersten Schiene und der zweiten Schiene kann auch eine Parallelbearbeitung auf beiden Schienen (Spanneinheiten 7 und 7B) erfolgen, wobei ein Werkzeugwechsel an der ersten oder zweiten Werkzeugspindel 3, 4 erst dann erfolgt, wenn die Bearbeitung der parallel verarbeiteten Werkstücke mit dem gleichen Werkzeug in den Werkzeugspindeln erfolgt ist. Das heißt, die Parallelbearbeitung in beiden Schienen erfolgt mit einem Zeitversatz von einem Bearbeitungsschritt.

Fig. 5 zeigt eine schematische Draufsicht auf eine Mehrseitenbearbeitungsmaschine 50 als Abwandlung der Mehrseitenbearbeitungsmaschine 1 von Fig. 1. Anstelle des Werkzeugwechslers 5 ist ein Werkzeughalter 51 vorgesehen, auf dem die Werkzeuge 41 entlang eines Bogens angeordnet sind. Mittels eines Werkzeughandlings 52 werden die Werkzeuge 41 aus dem Werkzeughalter 51 entnommen bzw. auf eine Leerposition im Werkzeughalter 51 zurückgesetzt. Das Werkzeughandling 52 hat einen in der Höhe vertikal verstellbaren Schwenkarm 53, der horizontal schwenkbar ist. Mit dem Schwenkarm 53 ist ein Greifer 54 zwischen einem der Werkzeuge 41 im Werkzeughalter 51 und einer Aufnahme (entsprechend Nr. 14 in Fig. 1) einer Werkzeugspindel 55 verfahrbar. Zum Werkzeugwechsel wird mit dem Greifer ein Werkzeug aus der Aufnahme der Werkzeugspindel 55 entnommen, das Werkzeug wird im Werkzeughalter 51 abgesetzt, und ein Werkzeug 41 für den nächsten Bearbeitungsschritt wird in die Aufnahme eingesetzt. In einer nicht dargestellten Ausführung wird ein Werkzeughandling 52 mit Doppelgreifer 54 verwendet, mit dem zunächst ein Werkzeug aus der Aufnahme entfernt und das Werkzeug für den nächsten Bearbeitungsschritt durch Drehen um die Schwenkarmachse 53 unter der Aufnahme positioniert wird. Die Werkzeugspindel 55 ist auf einer Vertikalführung 56 angeordnet, mit der ein vertikales Verstellen (Z-Richtung) der Werkzeugspindel 55 ermöglicht wird. Eine Bearbeitung in Längsachsenrichtung des Werkstücks erfolgt durch Verfahren einer Spanneinheit 7C in X-Richtung während der Bearbeitung durch die Werkzeugspindel 55. Der Betrieb der Werkzeugspindel 4 erfolgt wie oben bereits im Zusammenhang mit Fig. 1 und 2 beschrieben.

Wie bei den obigen Ausführungsformen dargestellt, erfolgt der Werkzeugwechsel an den Werkzeugspindeln mit einem Werkzeugwechsler (z.B. 5 oder 51, 52). Eine Aufnahme des Werkzeugs an den Wechsler bzw. eine Abgabe an den Werkzeugwechsler kann in ein oder zwei Übergabepositionen erfolgen, in denen die Werkzeugspindeln positioniert werden. Die Werkzeuge werden in einem Karussell oder einem umlaufenden Förderband zur Aufnahme/Abgabe positioniert, wobei 40 bis 60 Werkzeuge bereitstellbar sind. Oder eine Beladeeinrichtung 52 führt das Werkzeug zu, wobei auch hier der Beladeeinrichtung die Werkzeuge über einen Werkzeugwechsler in Form eines Karussells oder eines Förderbandes zugeführt werden.

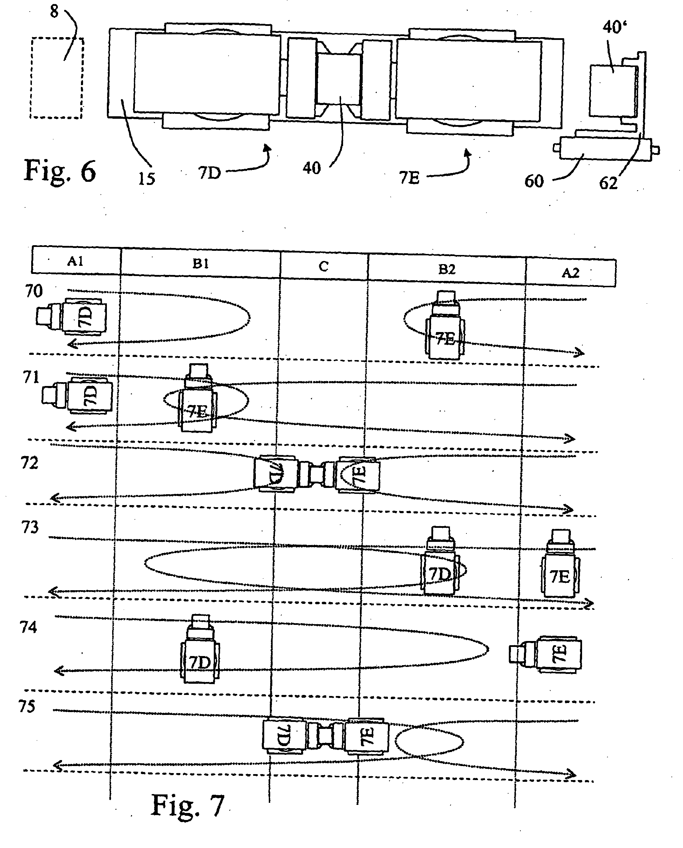

Fig. 6 zeigt eine Ausgestaltung der Mehrseitenbearbeitungsmaschinen 1, 45 und 50 der Fig. 1, 4 und 5, bei der zwei Spanneinheiten 7D und 7E auf einer Horizontalführung 15 angeordnet sind. Die Funktion der Spanneinheiten entspricht derjenigen der Spanneinheiten 7, 7B oder 7C. Zusätzlich zu einer unabhängigen Bearbeitung der Werkstücke 40 in den Spanneinheiten kann hier eine Übergabe eines Werkstücks 40 von der einen Spanneinheit 7D in die andere Spanneinheit 7E oder umgekehrt vorgesehen werden. Fig. 6 zeigt die Ausrichtung der Spanneinheiten 7D, 7E bei der Übergabe des Werkstücks, wobei das in einem Spannkopf 19 einer Spanneinheit gespannte Werkstück in den offenen Spannkopf (Spannbacken sind geöffnet) der anderen Spanneinheit eingefahren und dann durch Schließen der Spannbacken von diesem gegriffen wird. Danach löst der erste Spannkopf 19 die Spannbacken und gibt so das Werkstück für die andere Spanneinheit frei. Die Übergabe kann entlang des Verfahrweges der Horizontalführung an einer beliebigen Stelle erfolgen, vorzugsweise an einer Stelle, die in einer minimalen Übergabezeit resultiert

Die Entnahme und/oder die Zufuhr des Werkstücks 40 zur/von der linken Spanneinheit 7D erfolgt mittels des gestrichelt dargestellten Handlings 8. Die Entnahme und/oder Zufuhr eines Werkstücks 40' von der/zur rechten Spanneinheit 7E erfolgt mittels eines aktiven oder passiven Klemmsockels 62. Die Spanneinheit 7E führt ein in diese eingespanntes Werkstück 40' in den Klemmsockel senkrecht ein (in X-Richtung nach rechts in Fig. 6), wo das Werkstück 40' entweder durch das Einführen passiv oder durch einen Aktuator des Klemmsockels 62 aktiv geklemmt wird. Das Entnehmen eines Werkstücks aus dem Klemmsockel erfolgt umgekehrt. Eine Vielzahl von Klemmsockeln 62 ist auf einer Fördereinrichtung 60 angeordnet. Die Fördereinrichtung 60 stellt für die Spanneinheit 7E ein zu bearbeitendes Werkstück 40' bereit und/oder führt ein bearbeitetes Werkstück 40' von der Spanneinheit 7E ab. Es können auch die oben beschriebenen Anordnungen von Handlings 8, 8B oder 8C zum Einsatz kommen.

Es ist selbstverständlich, dass eine solche Einheit bestehend aus zwei Spanneinheiten 7D, 7E und einer Horizontalführung als solche an jeder Art von Werkzeugmaschine oder Bearbeitungsmaschine einsetzbar ist und nicht nur auf die Verwendung an den Maschinen 1, 45 und 50 der obigen Ausführungsbeispiele beschränkt ist.

Fig. 7 veranschaulicht exemplarisch Bearbeitungsabläufe für die Anordnung nach Fig. 6. Die Spalte A1 stellt die Aufnahme/Abgabe des Werkstücks von der Spanneinheit 7D an das Handling 8 oder umgekehrt dar. Die Spalte B1 symbolisiert die Bearbeitungsposition des Werkstücks zur Bearbeitung mit der ersten Bearbeitungseinrichtung (z.B. mit der Werkzeugspindel 3 oder 55). Die Spalte C symbolisiert die Werkstückübergabe, wobei die räumliche X-Position wie oben erwähnt an jeder erreichbaren Stelle der Führung 15 liegen kann. Die Spalte B2 symbolisiert die Bearbeitungsposition des Werkstücks zur Bearbeitung mit der zweiten Bearbeitungseinrichtung (z.B. mit der Werkzeugspindel 4). Die Spalte A2 stellt die Aufnahme/Abgabe des Werkstücks von der Spanneinheit 7E an den Klemmsockel 62 oder umgekehrt dar.

Im Modus 70 (dargestellt in der mit 70 bezeichneten Zeile) arbeiten beide Spanneinheiten 7D, 7E unabhängig voneinander: 7D nur in der linken Bearbeitungsposition B 1 und 7E nur in der rechten Bearbeitungsposition B2. Es findet kein Wechsel zwischen den Bearbeitungspositionen B1 und B2 und keine Werkstückübergabe C statt.

Im Modus 71 fährt die Spanneinheit 7D nur die linke Bearbeitungsposition B1 an und die Spanneinheit 7E fährt beide Bearbeitungspositionen B1 und B2 an. Es findet keine Werkstückübergabe C statt.

Im Modus 72 fährt die Spanneinheit 7D nur die linke Bearbeitungsposition B 1 an und die Spanneinheit 7E fährt nur die rechte Bearbeitungsposition B2 an. Eine Werkstückübergabe C erfolgt zwischen den Spanneinheiten 7D und 7E oder umgekehrt. Eine Übergabe C kann auch erst in die eine und dann in die andere Richtung erfolgen.

Im Modus 73 fährt die Spanneinheit 7D beide Bearbeitungspositionen B 1 und B2 an und die Spanneinheit 7E fährt ebenfalls beide Bearbeitungspositionen B 1 und B2 an. Es findet keine Werkstückübergabe C statt.

Im Modus 74 fährt die Spanneinheit 7D beide Bearbeitungspositionen B 1 und B2 an und die Spanneinheit 7E führt ausschließlich eine Werkstückübergabe C aus, d.h. in diesem Fall arbeitet die Spanneinheit 7E selbst als Handling. Vorzugsweise fährt die Spanneinheit zur Übergabe C an eine Stelle, bei der die Fahrzeiten der Spanneinheit 7D minimiert sind.

Im Modus 75 fährt die Spanneinheit 7D beide Bearbeitungspositionen B1 und B2 an und die Spanneinheit 7E fährt nur die Bearbeitungspositionen B2 an. Es findet eine Werkstückübergabe C zwischen den Spanneinheiten statt.

Eine Vielzahl weiterer Modi ist möglich. Beispielsweise kann noch vorgesehen sein, dass die Werkstückübergabe C erfolgt, während beide Spanneinheiten 7D, 7E auf der Führung 15 verfahren werden. Insgesamt ermöglicht somit die Anordnung von Fig. 6 ein riesiges Potential für die Optimierung von Zeit- und Bearbeitungsabläufen. Die verschiedensten Werkstücke können somit auf komplexe und sehr schnelle Weise bearbeitet werden.

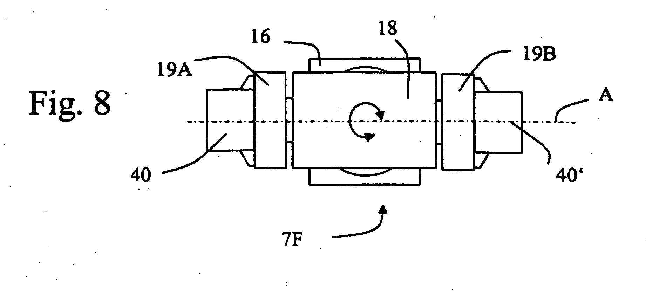

Fig. 8 zeigt eine Doppel-Spanneinheit 7F als Ausgestaltung einer der zuvor beschriebenen Spanneinheiten 7, 7B bis 7E. Bei der Spanneinheit 7F sind an beiden Enden des Spindelantriebs 18 je ein Spannkopf 19A, 19B angeordnet, die durch den Antrieb 18 synchron angetrieben werden. Das Spannen/Lösen der Werkstücke 40, 40' in den Spannköpfen 19A, 19B erfolgt vorteilhaft unabhängig voneinander, so dass die Zufuhr und die Entnahme der Werkstücke 40, 40' z.B. durch die Handlings 8, 8B oder 8C oder den Klemmsockel 62 nacheinander erfolgen kann. Die Doppel-Spanneinheit 7F ist wie die anderen Spanneinheiten drehbar am Schlitten 16 gelagert, der entlang der Horizontalführung 15, 15A verfahrbar ist. Bei der Anordnung von Fig. 6 können beispielsweise eine oder zwei Doppel-Spanneinheiten 7F vorgesehen sein.

### Bezugszeichenliste

- 1: Mehrseitenbearbeitungsmaschine
- 2: Maschinenständer
- 3: erste Werkzeugspindel
- 4: zweite Werkzeugspindel
- 5: Werkzeugwechsler
- 6: Werkzeughalter
- 7, 7B - 7F: Spanneinheit 8, 8B, 8C Handling
- 9, 9B: Palettiereinrichtung
- 12: Vertikalführung
- 13, 13A: Horizontalführung
- 14: Aufnahme
- 15, 15B, 15C: Horizontalführung
- 16: Schlitten
- 18: Spindelantrieb
- 19, 19A, 19B: Spannkopf
- 30: Bodenführung
- 31: Vertikalverstelleinheit
- 32: Schwenklager
- 33: Greifarm
- 34: Greifer
- 36: Palettentisch
- 38: Bearbeitungskabine
- 39: Handhabungskabine
- 40, 40': Werkstück
- 41: Werkzeug
- 45: Mehrseitenbearbeitungsmaschine
- 50: Mehrseitenbearbeitungsmaschine
- 51: Werkzeughalter
- 52: Werkzeughandling
- 53: Schwenkarm
- 54: Greifer
- 55: Werkzeugspindel
- 56: Vertikalführung
- 60: Fördereinrichtung
- 62: Klemmsockel
- 70-75: Betriebsmodus
- A1, A2: Werkstückaufnahme/-abgabe
- B1, B2: Bearbeitungsposition
- C: Werkstückübergabe

## Patentansprüche

1. Bearbeitungsmaschine (1, 45, 50) zum Bearbeiten eines Werkstücks (40, 40'),
wobei die Bearbeitungsmaschine aufweist:
zumindest zwei Bearbeitungseinrichtungen (3, 4, 55) zum Bearbeiten eines Werkstücks (40, 40'), und
zumindest eine Positioniervorrichtung (7, 7B - 7F) mit zumindest einer Einspannvorrichtung (19, 19A, 19B) zum Einspannen eines Werkstücks (40, 40'), wobei die Positioniervorrichtung (7, 7B - 7F) auf einer Verstelleinrichtung (15, 15B, 15C, 16) angeordnet ist, mit der ein eingespanntes Werkstück (40, 40') zwischen den Bearbeitungspositionen der zumindest zwei Bearbeitungseinrichtungen (3, 4, 55) verfahrbar ist,
wobei zumindest eine erste der Bearbeitungseinrichtungen (3, 4, 55) eine Aufnahme (14) für austauschbares Werkzeug (41) aufweist;
**dadurch gekennzeichnet, dass**
die Einspannvorrichtung (19, 19A, 19B) um eine Längsachse (A) und eine Querachse (B) dreh- oder schwenkbar ist;
ein Werkzeugwechsler (5; 51, 52) vorgesehen ist, mittels dessen ein Werkzeugwechsel an zumindest der ersten Bearbeitungseinrichtung (3, 4, 55) durchführbar ist; und
mittels der Bearbeitungsmaschine mehrere Flächen bzw. Seiten des Werkstücks (40, 40') bearbeitbar sind.

2. Bearbeitungsmaschine nach Anspruch 1, wobei die zumindest eine Einspannvorrichtung (19, 19A, 19B) unter einem beliebigen oder zumindest zwei vorgegebenen Drehwinkeln positionierbar ist.

3. Bearbeitungsmaschine nach Anspruch 1 oder 2, wobei die zumindest eine Einspannvorrichtung (19, 19A, 19B) auf einer Antriebsspindel (18) angeordnet ist.

4. Bearbeitungsmaschine nach Anspruch 3, wobei die zumindest eine Einspannvorrichtung (19, 19A, 19B) mit einer Drehzahl von mindestens 100 U/min antreibbar ist, vorzugsweise mit mindestens 500 U/min.

5. Bearbeitungsmaschine nach einem der vorhergehenden Ansprüche, wobei ein Werkstück (40, 40') bei drehender Einspanneinrichtung (19, 19A, 19B) mittels eines in einer der Bearbeitungseinrichtungen (3, 4, 55) drehfest eingespannten Werkzeugs (41) drehend bearbeitbar ist.

6. Bearbeitungsmaschine nach einem der vorhergehenden Ansprüche, wobei die Längsachse (A) der Einspanneinrichtung (19, 19A, 19B) horizontal ausgerichtet oder horizontal ausrichtbar ist.

7. Bearbeitungsmaschine nach einem der vorhergehenden Ansprüche, wobei die Einspanneinrichtung (19, 19A, 19B) in vorgegebenen Drehpositionen arretierbar ist, vorzugsweise mittels hydraulischer Klemmung.

8. Bearbeitungsmaschine nach einem der vorhergehenden Ansprüche, wobei beide Bearbeitungseinrichtungen (3, 4, 55) an einem gemeinsamen Maschinengrundgestell (2) gelagert sind.

9. Bearbeitungsmaschine nach einem der vorhergehenden Ansprüche, wobei zumindest eine der Bearbeitungseinrichtungen (3, 4, 55) auf einer Verstelleinrichtung (12, 56) angeordnet ist, mit der diese Bearbeitungseinrichtung vertikal verfahrbar ist.

10. Bearbeitungsmaschine nach einem der vorhergehenden Ansprüche, wobei zumindest eine der Bearbeitungseinrichtungen (3, 4) auf einer Verstelleinrichtung (13) angeordnet ist, mit der die Bearbeitungseinrichtung zwischen einer Bearbeitungsposition und zumindest einer Werkzeugladeposition verfahrbar ist, insbesondere horizontal verfahrbar ist.

11. Bearbeitungsmaschine nach einem der vorhergehenden Ansprüche, wobei der Werlczeugwechsler (5; 51,52) eine Bestückungseinrichtung (52) zum Be- und Entladen von Werkzeugen (41) bei zumindest der ersten Bearbeitungseinrichtung (55) aufweist.

12. Bearbeitungsmaschine nach einem der vorhergehenden Ansprüche, wobei der Werkzeugwechsler (5; 51, 52) zumindest eine Werkzeugbereitstellungseinrichtung (5) aufweist, die zumindest der ersten Bearbeitungseinrichtung (3) ein zu verwendendes Werkzeug zu einer Ladeposition der Bearbeitungseinrichtung zustellt.

13. Bearbeitungsmaschine nach einem der vorhergehenden Ansprüche, wobei die Verstelleinrichtung (15, 15B, 15C; 16) der zumindest einen Positioniervorrichtung (7, 7B-7F) an einem Maschinengrundgestell (2) gelagert ist.

14. Bearbeitungsmaschine nach einem der vorhergehenden Ansprüche, wobei die Verstelleinrichtung (12, 13, 13A, 56) zumindest einer der Bearbeitungseinrichtungen (3, 4, 55) eine horizontal verlaufende Linearführung (13, 13A) und/oder eine vertikal verlaufende Linearführung (12, 56) aufweist.

15. Bearbeitungsmaschine nach einem der vorhergehenden Ansprüche, mit
zumindest einer Handhabungseinrichtung (8, 8B, 8C) zum Zuführen eines Werkstücks (40, 40') in die Einspannvorrichtung (19, 19A, 19B) und Entnehmen eines Werkstücken (40) von der Einspannvorrichtung der zumindest einen Positioniervorrichtung (7, 7B - 7F) und/oder
zumindest einer Bereitstellungseinrichtung (60, 62) zum Übergeben eines Werkstücks von oder zur Einspannvorrichtung (19, 19A, 19B) der Positioniervorrichtung (7, 7B - 7F).

16. Bearbeitungsmaschine nach einem der vorhergehenden Ansprüche, wobei zumindest eine der Bearbeitungseinrichtungen (3, 4, 55) eine Werkzeugspindel oder ein Werkzeugrevolver ist.

17. Bearbeitungsmaschine nach einem der vorhergehenden Ansprüche, wobei ein, zwei oder mehr Positioniervorrichtungen (7, 7B - 7F) jeweils auf einem Schlitten (16) angeordnet und unabhängig voneinander auf einer Führung (15, 15B, 15C) verfahrbar sind.

18. Bearbeitungsmaschine nach Anspruch 17, wobei zumindest zwei oder jeweils zwei Positioniervorrichtungen (7D, 7E) relativ zueinander so positionierbar sind, dass ein Werkstück (40, 40') zwischen den zwei Positioniervorrichtungen (7D, 7E) übergebbar ist.

19. Bearbeitungsmaschine nach einem der vorhergehenden Ansprüche, wobei zumindest an einer Positioniervorrichtung (7F) zwei Einspannvorrichtungen (19A, 19B) angeordnet sind.

20. Bearbeitungsmaschine Anspruch 19, wobei ein Werkstück (40, 40') mittels der beiden Einspannvorrichtungen (19A, 19B) unabhängig einspannbar und lösbar ist und/oder die beiden Einspannvorrichtungen (19A, 19B) synchron antreibbar sind.

21. Verfahren zum Bearbeiten mehrerer Flächen bzw. Seiten eines Werkstücks (40, 40') an einer Mehrseitenbearbeitungsmaschine nach einem der vorhergehenden Ansprüche, wobei das Verfahren die Schritte aufweist:
Bearbeitung des eingespannten Werkstücks (40, 40') an der ersten Bearbeitungseinrichtung (3), und
nach der Bearbeitung des eingespannten Werkstücks (40, 40') an der ersten Bearbeitungseinrichtung (3), Überführung des eingespannten Werkstücks (40, 40') mit der Positioniervorrichtung (7, 7B - 7F) zur zweiten Bearbeitungseinrichtung (4) während bei der ersten Bearbeitungseinrichtung (3) in deren Werkzeugladeposition ein Werkzeugwechsel durchgeführt wird.

## Claims

1. Processing machine (1, 45, 50) for processing a workpiece (40, 40'), wherein the processing machine comprises:
at least two processing devices (3, 4, 55) for processing a workpiece (40, 40'), and
at least one positioning device (7, 7B-7F) having at least one clamping device (19, 19A, 19B) for clamping a workpiece (40, 40'), wherein the positioning device (7, 7B-7F) is arranged on a displacement device (15, 15B, 15C, 16), by means of which a clamped workpiece (40, 40') may be moved between the processing positions of the at least two processing devices (3, 4, 55),
wherein at least a first of the processing devices (3, 4, 55) comprises a holder (14) for exchangeable tool (41);
**characterized in that**
the clamping device (19, 19A, 19B) may be rotated or pivoted around a longitudinal axis (A) and a transverse axis (B);
a tool exchanger (5; 51, 52) is provided, by means of which a tool exchange may be carried out at the at least first processing device (3, 4, 55); and
by means of the processing machine multiple surfaces or sides of the workpiece (40, 40') may be processed.

2. Processing machine according to claim 1, wherein the at least one clamping device (19, 19A 19B) may be positioned in an arbitrary or at least two predefined rotation angles.

3. Processing machine according to claim 1 or 2, wherein the at least one clamping device (19, 19A, 19B) is arranged on a drive spindle (18).

4. Processing machine according to claim 3, wherein the at least one clamping device (19, 19A 19B) may be driven by a rotational speed of at least 100 r/min, preferably of at least 500 r/min.

5. Processing machine according to any of the previous claims, wherein a workpiece (40, 40') may be rotatingly processed by means of a tool (41) clamped torsionally stiff in one of the processing devices (3, 4, 55) while the clamping device (19, 19A, 19B) is rotating.

6. Processing machine according to any of the previous claims, wherein the longitudinal axis (A) of the clamping device (19, 19A, 19B) is horizontally aligned or may be horizontally aligned.

7. Processing machine according to any of the previous claims, wherein the clamping device (19, 19A, 19B) may be locked in predefined rotational positions, preferably by means of hydraulic clamping.

8. Processing machine according to any of the previous claims, wherein both processing devices (3, 4, 55) are supported on a common machine base frame (2).

9. Processing machine according to any of the previous claims, wherein at least one of the processing devices (3, 4, 55) is arranged on a displacement device (12, 56), by means of which this processing device may be vertically moved.

10. Processing machine according to any of the previous claims, wherein at least one of the processing devices (3, 4) is arranged on a displacement device (13), by means of which the processing device may be moved between a processing position and at least one tool loading position, in particular may be moved horizontally.

11. Processing machine according to any of the previous claims, wherein the tool exchanger (5; 51, 52) comprises a loading device (52) for loading and unloading tools (41) in the at least first processing device (55).

12. Processing machine according to any of the previous claims, wherein the tool exchanger (5; 51, 52) comprises at least one tool supply device (5) supplying to the at least first processing device (3) a tool to be used to a loading position of the processing device.

13. Processing machine according to any of the previous claims, wherein the displacement device (15, 15B, 15C) of the at least one positioning device (7, 7B-7F) is supported on a machine base frame (2).

14. Processing machine according to any of the previous claims, wherein the displacement device (12, 13, 13A, 56) of at least one of the processing devices (3, 4, 55) comprises a horizontally running linear guiding (13, 13A) and/or a vertically running linear guiding (12, 56).

15. Processing machine according to any of the previous claims, comprising
at least one handling device (8, 8B, 8C) for feeding a workpiece (40, 40') to the clamping device (19, 19A, 19B) and removing a workpiece (40) from the clamping device of the at least one positioning device (7, 7B-7F) and/or
at least one supply device (60, 62) for transferring a workpiece from or to the clamping device (19, 19A, 19b) of the positioning device (7, 7B-7F).

16. Processing machine according to any of the previous claims, wherein at least one of the processing devices (3, 4, 55) is a tool spindle or a tool turret.

17. Processing machine according to any of the previous claims, wherein one, two or more positioning devices (7, 7B-7F) are each arranged on one slide (16) and may be moved independent from each other on a guiding (15, 15B, 15C).

18. Processing machine according to claim 17, wherein at least two or each of two positioning devices (7D, 7E) may be positioned relative to each other such that a workpiece (40, 40') may be transferred between the two positioning devices (7D, 7E).

19. Processing machine according to any of the previous claims, wherein at least at one positioning device (7F) two clamping devices (19A, 19B) are arranged.

20. Processing machine according to claim 19, wherein a workpiece (40, 40') may be independently clamped and removed by means of the two clamping devices (19A, 19B) and/or the two clamping devices (19A, 19B) may be synchronously driven.

21. Method for processing multiple surfaces or sides of a workpiece (40, 40') at a multiple side processing machine according to any of the previous claims, wherein the method comprises the steps of:
processing the clamped workpiece (40, 40') at the first processing device (3), and
after processing the clamped workpiece (40, 40') at the first processing device (3), transferring the clamped workpiece (40, 40') by the positioning device (7, 7B-7F) to the second processing device (4), while a tool exchange is carried out at the first processing device (3) in the tool loading position thereof.

## Revendications

1. Machine d'usinage (1, 45, 50) destinée à usiner une pièce (40, 40'), la machine d'usinage présentant :
- au moins deux dispositifs d'usinage (3, 4, 55) pour usiner une pièce (40, 40') et
- au moins un dispositif de positionnement (7, 7B - 7F) doté d'au moins un dispositif de serrage (19, 19A, 19B) pour immobiliser une pièce à usiner (40, 40'), le dispositif de positionnement (7, 7B - 7F) étant disposé sur un dispositif de déplacement (15, 15B, 15C, 16) qui permet de déplacer une pièce à usiner (40, 40') immobilisée entre les positions d'usinage des au moins deux dispositifs d'usinage (3, 4, 55),
- sachant qu'au moins un premier des dispositifs d'usinage (3, 4, 55) présente une prise (14) pour un outil remplaçable (41),
**caractérisé en ce que**
- le dispositif de serrage (19, 19A, 19B) peut tourner ou pivoter autour d'un axe longitudinal (A) et d'un axe transversal (B) ;
- un changeur d'outil (5 ; 51, 52) est prévu, qui permet de changer au moins l'outil du premier dispositif d'usinage (3, 4, 55) ; et **en ce que**
- la machine d'usinage permet d'usiner plusieurs surfaces ou faces d'une pièce à usiner (40, 40').

2. Machine d'usinage selon la revendication 1, l'au moins unique dispositif de serrage (19, 19A, 19B) pouvant être positionné selon un angle de rotation quelconque ou selon au moins deux angles de rotation prédéfinis.

3. Machine d'usinage selon la revendication 1 ou 2, l'au moins un dispositif de serrage (19, 19A, 19B) étant placé sur une broche d'entraînement (18).

4. Machine d'usinage selon la revendication 3, l'au moins un dispositif de serrage (19, 19A, 19B) pouvant être entraîné à une vitesse d'au moins 100 tr/min, de préférence à une vitesse d'au moins 500 tr/min.

5. Machine d'usinage selon l'une des revendications précédentes, une pièce à usiner (40, 40') immobilisée par le dispositif de serrage (19, 19A, 19B) rotatif pouvant être usinée par tournage au moyen d'un outil (41) immobilisé en rotation dans l'un des dispositifs d'usinage (3, 4, 55).

6. Machine d'usinage selon l'une des revendications précédentes, l'axe longitudinal (A) du dispositif de serrage (19, 19A, 19B) étant ou pouvant être orienté horizontalement.

7. Machine d'usinage selon l'une des revendications précédentes, le dispositif de serrage (19, 19A, 19B) pouvant être bloqué dans des positions en rotation prédéfinies, de préférence au moyen d'un dispositif de blocage hydraulique.

8. Machine d'usinage selon l'une des revendications précédentes, les deux dispositifs d'usinage (3, 4, 55) étant montés sur un bâti de machine commun (2).

9. Machine d'usinage selon l'une des revendications précédentes, au moins l'un des dispositifs d'usinage (3, 4, 55) étant placé sur un dispositif de déplacement (12, 56) permettant de déplacer verticalement ledit dispositif d'usinage.

10. Machine d'usinage selon l'une des revendications précédentes, au moins l'un des dispositifs d'usinage (3, 4) étant placé sur un dispositif de déplacement (13) permettant de déplacer ledit dispositif d'usinage entre une position d'usinage et au moins une position de chargement d'outil, notamment de le déplacer horizontalement.

11. Machine d'usinage selon l'une des revendications précédentes, le changeur d'outil (5 ; 51, 52) présentant un dispositif de montage (52) pour charger et décharger des outils (41) au moins au niveau du premier dispositif d'usinage (55).

12. Machine d'usinage selon l'une des revendications précédentes, le changeur d'outil (5 ; 51, 52) présentant au moins un dispositif de mise à disposition des outils (5) qui délivre un outil à utiliser au niveau d'un emplacement de prise en charge du premier dispositif d'usinage (3) au moins.

13. Machine d'usinage selon l'une des revendications précédentes, le dispositif de déplacement (15, 15B, 15C ; 16) de l'au moins un dispositif de positionnement (7, 7B-7F) est monté sur un bâti de machine (2).

14. Machine d'usinage selon l'une des revendications précédentes, le dispositif de déplacement (12, 13, 13A, 56) d'au moins l'un des dispositifs d'usinage (3, 4, 55) présente un guidage linéaire s'étendant horizontalement (13, 13A) et/ou un guidage linéaire s'étendant verticalement (12, 56).

15. Machine d'usinage selon l'une des revendications précédentes, comprenant :
- au moins un dispositif de manipulation (8, 8B, 8C) pour mettre une pièce à usiner (40, 40') dans le dispositif de serrage (19, 19A, 19B) et retirer une pièce à usiner (40) du dispositif de serrage de l'au moins un dispositif de positionnement (7, 7B-7F) et/ou
- au moins un dispositif de mise à disposition (60, 62) pour transmettre une pièce à usiner provenant du dispositif de serrage (19, 19A, 19B) du dispositif de positionnement (7, 7B-7F) ou vers ledit dispositif de serrage.

16. Machine d'usinage selon l'une des revendications précédentes, au moins l'un des dispositifs d'usinage (3, 4, 55) étant une broche porte-outil ou une tourelle revolver d'outils.

17. Machine d'usinage selon l'une des revendications précédentes, un, deux ou davantage de dispositifs de positionnement (7, 7B-7F) étant chaque fois disposés sur un chariot (16) et pouvant être déplacés indépendamment les uns des autres sur une glissière (15, 15B, 15C).

18. Machine d'usinage selon la revendication 17, au moins deux ou chaque fois deux dispositifs de positionnement (7D, 7E) pouvant être positionnés l'un par rapport à l'autre de telle sorte qu'une pièce à usiner (40, 40') puisse passer de l'un à l'autre.

19. Machine d'usinage selon l'une des revendications précédentes, deux dispositifs de serrage (19A, 19B) équipant au moins un dispositif de positionnement (7F).

20. Machine d'usinage selon la revendication 19, une pièce à usiner (40, 40') pouvant être immobilisée et libérée de façon indépendante au niveau des deux dispositifs de serrage (19A, 19B), et/ou les deux dispositifs de serrage (19A, 19B) pouvant être entraînés de façon synchrone.

21. Procédé pour usiner plusieurs surfaces ou faces d'une pièce à usiner (40, 40') sur une machine d'usinage multiface selon l'une des revendications précédentes, le procédé comprenant les étapes suivantes :
- usinage de la pièce à usiner immobilisée (40, 40') au niveau du premier dispositif d'usinage (3), et
- après usinage de la pièce à usiner immobilisée (40, 40') au niveau du premier dispositif d'usinage (3), transmission de la pièce à usiner (40, 40') immobilisée, par le dispositif de positionnement (7, 7B - 7F), au second dispositif d'usinage (4), tandis qu'un changement d'outil est opéré au niveau du premier dispositif d'usinage (3), ce dernier étant en position de chargement d'outil.
